# EUROPEAN PATENT SPECIFICATION

(11) **EP 3 649 731 B1**
(45) Date of publication and mention of the grant of the patent: **09.06.2021**
(21) Application number: 18755158.5
(22) Date of filing: 03.08.2018
(51) Int. Cl.: H02P 25/22, H02M 7/538, H02M 1/12

(54) **CONTROL A DUAL THREE-PHASE ELECTRICAL MACHINE**
STEUERUNG EINER DUALEN DREIPHASIGEN ELEKTRISCHEN MASCHINE
COMMANDE D'UNE MACHINE ÉLECTRIQUE TRIPHASÉE DOUBLE

(30) Priority: 08.08.2017 DE 102017213804
(43) Date of publication of application: 13.05.2020
(73) Proprietor: Siemens Gamesa Renewable Energy A/S, 7330 Brande (DK)
(72) Inventor: GODRIDGE, Paul, Cheadle Hulme Greater Manchester SK8 7HX (GB); WU, Zhan-Yuan, Sheffield South Yorkshire S10 4BB (GB); AZAR, Ziad, Sheffield South Yorkshire S10 4ED (GB); THOMAS, Arwyn, Cheadle Hulme Greater Manchester SK8 6HW (GB)
(74) Representative: Aspacher, Karl-Georg
(86) International application number: PCT/EP2018/071129
(87) International publication number: WO 2019/030138

(56) References cited:
- US-A1- 2003 085 627
- US-A1- 2014 008 912
- YAZDANI D ET AL: "Full Utilization of the Inverter in Split-Phase Drives by Means of a Dual Three-Phase Space Vector Classification Algorithm", IEEE TRANSACTIONS ON INDUSTRIAL ELECTRONICS, vol. 56, no. 1, 1 January 2009 (2009-01-01), pages 120-129, XP011229422, IEEE SERVICE CENTER, PISCATAWAY, NJ, USA ISSN: 0278-0046, DOI: 10.1109/TIE.2008.927405
- ZHOU CHANGPAN ET AL: "PWM Strategy With Minimum Harmonic Distortion for Dual Three-Phase Permanent-Magnet Synchronous Motor Drives Operating in the Overmodulation Region", IEEE TRANSACTIONS ON POWER ELECTRONICS, vol. 31, no. 2, 1 February 2016 (2016-02-01), pages 1367-1380, XP011670450, INSTITUTE OF ELECTRICAL AND ELECTRONICS ENGINEERS, USA ISSN: 0885-8993, DOI: 10.1109/TPEL.2015.2414437 [retrieved on 2015-09-29]
- BAIMEL D ET AL: "Phase shifted PWM with third harmonic injection for over-modulation range operation", 2014 INTERNATIONAL SYMPOSIUM ON POWER ELECTRONICS, ELECTRICAL DRIVES, AUTOMATION AND MOTION (SPEEDAM 2014) IEEE PISCATAWAY, NJ, USA, 2014, pages 753-757, XP002785832, ISBN: 978-1-4799-4749-2
- JERRY THUNES ET AL: "Current Regulator Instabilities on Parallel Voltage-Source Inverters", IEEE TRANSACTIONS ON INDUSTRY APPLICATIONS, vol. 35, no. 1, 1 February 1999 (1999-02-01), XP011022531, IEEE SERVICE CENTER, PISCATAWAY, NJ, US ISSN: 0093-9994

## Description

### Field of invention

The present invention relates to a method and arrangement for control of a dual three-phase machine with 30-degree phase shift between the two sets, for example a fractional slot concentrated winding electrical machine, and relates further to a generator system comprising the arrangement and even further relates to a wind turbine comprising the generator system.

### Art Background

A dual three-phase machine such as a fractional slot machine, having a fractional ratio between number of slots and number of poles and having a rotor with permanent magnets, is conventionally known. Thereby, in particular two independent three-phase winding sets may be provided in the stator which may be independently controlled, for example in a generator mode of operation.

For high power wind turbine applications, a good usage of the converter DC link voltage may allow the generator to operate with reduced current and thus lower copper losses and higher efficiency, or to produce more power with the rated current. On the other hand, to produce a given level of generator terminal voltage, the DC link voltage may be lowered, so that the lifetime of the converter may be improved.

Conventionally, the generator voltage may be controlled by a pulse width modulation (PWM) operation of the converter. Conventionally, the third harmonic injection PWM or space vector PWM is applied, to allow the converter output voltage controlled with a maximum modulation depth of "1" in the linear operation range. If higher output voltage is required, overmodulation techniques may conventionally be employed. However, the increase in fundamental output would be sacrificed with the introduction of low order harmonic distortion, which may dominantly be a sixth order of the fundamental harmonic, i.e. 6f.

Conventionally, both requirements, to achieve a relatively high AC output voltage and at the same time have reasonably low harmonic distortion, in particular 6f harmonic distortion, has not been achieved.

Thus, there may be a need for a method and for an arrangement for controlling such a dual three-phase electrical machine, which provides a sufficiently high AC output voltage and at the same time keeps the effect of harmonic distortion, in particular the 6f harmonic distortion such as torque ripple, at a reasonably low level.

The IEEE paper *Full Utilization of the Inverter in Split-Phase Drives by Means of a Dual Three-Phase Space Vector Classification Algorithm* discloses a control for a six-phase split-phase machine comprising two three-phase inverters independently controlled the one in overmodulation operation mode and the other in linear operation mode.

### Summary of the Invention

This need may be met by the subject matter according to the independent claims. Advantageous embodiments of the present invention are described by the dependent claims.

According to the present invention it is provided a method for controlling a dual three-phase electrical machine with 30-degree phase shift between the two sets, for example a fractional slot concentrated winding electrical machine having a first three-phase winding set being connected to a first AC-DC converter and having a second three-phase winding set being connected to a second AC-DC converter, the method comprising: controlling the first and the second AC-DC converter such that first electric currents carried in the first three-phase winding set are essentially 30° phase shifted relative to respective second electric currents carried in the second three-phase winding set.

As the dual three-phase machine, for example a dual three-phase fractional slot concentrated winding electrical machine, is designed to have a 30-degree phase shift between the two sets, the presence of 6f harmonic may be tolerated.

The fractional slot concentrated winding electrical machine has a number of slots and a number of poles (in particular permanent magnet poles mounted on a rotor rotatably supported with respect to the stator having arranged thereon the three-phase winding sets), wherein the ratio between the number of slots and the number of poles is not an integer, but a fractional number. For example, the number of slots may be 12 and the number of poles may be 10. Other values are possible according to embodiments of the present invention.

The electrical machine may have exactly two different and independent three-phase winding sets, i.e. the first and the second three-phase winding set. The three-phase winding sets may be wound in slots of a stator having teeth protruding radially inwards or radially outwards for the case of an inner rotor or an outer rotor, respectively. Different winding schemes may be applied. In particular, a concentrated winding design may be applied where the winding for each phase may consist of multiple coils in series or parallel. Furthermore, such arrangement for the first and second winding sets may be repeated for a machine with higher number of poles.
Each of the three-phase winding sets may be connected in a star configuration for example such that all three conductors of one three-phase winding set are electrically connected at one end to each other. The other three ends of the three conductors of each of the three-phase winding sets may be connected to the respective AC-DC converter. Thus, the first and the second AC-DC converter may each have three input terminals also referred to input legs. Each of the input legs may be connected in between a series connection of two controllable switches, such as transistors, in particular high power transistors such as IGBTs. The transistors or controllable switches may be controlled by appropriate control signals supplied to their gates. The control signals may be pulse width modulation signals. The controllable switches may be controlled so that at no time both switches in the same leg are turned on. Thus, the two controllable switches in a series connection in the middle of which one leg is connected are never on at the same time but are operated in a complementary manner, such that if one is on, the other is off and vice versa. This may lead to eight possible switching vectors for the AC-DC converter which may be labelled V₀ through V₇, as is conventionally known. Six of the possible eight switching vectors may be referred to as active vectors, as they result in voltages between mutually two terminals of the winding set which is different from zero (may result in the AC input voltages between the different legs not being zero).

To implement a PWM modulation such as space vector modulation, a control vector (below described in more detail with reference to a first control vector) may be sampled with a particular sampling frequency and the control vector (i.e. the first control vector and/or the second control vector) may then be synthesized using a combination of the possible switching vectors, in particular using two adjacent active switching vectors and none, one or both of the zero vectors.

According to embodiments of the present invention, the first and the second AC-DC converter may be constructed in a similar or same manner. Further, both, the first and the second AC-DC converter may be controlled essentially in the same manner but phase shifted by 30° relative to each other.

When the first and the second AC-DC converter are controlled such that the first and the second currents in the first and the second three-phase winding sets are essentially 30° phase shifted relative to each other, advantageously, a 6f harmonic torque may cancel out upon combining, in particular adding, the first and second output currents/voltages. In particular, a 6f harmonic torque produced by the combination of the first three-phase winding set connected to the first AC-DC converter may substantially be 180° out of phase with a 6f harmonic torque generated by the second three-phase winding set connected to the second AC-DC converter, but with the same amplitude. Thus, when the machine torque produced from the first set which is fed from the first AC-DC converter is added to the machine torque from the second set fed from the second AC-DC converter, the 6f harmonic of the machine torque may cancel out. This may even be the case, when the three-phase winding sets or the converter are (partly) controlled in the overmodulation regime. Thus, at the same time, a higher AC voltage may be achievable (at the first and the second three-phase winding sets) compared to what was conventionally achievable. Thereby, the currents in the winding sets may be reduced, thus lowering the copper losses and providing a higher efficiency or enabling to produce more power with the rated current.

On the other hand, to produce a given level of generator terminal voltage (the AC voltage at the terminals of the three-phase winding sets), the DC link voltage may be lower so that the lifetime of the converter may be prolonged.

According to an embodiment of the present invention, a first current of an A phase of the first three-phase winding set is generated to be essentially 30° phase shifted relative to a second current of an A phase of the second three-phase winding set, wherein a first current of a B phase of the first three-phase winding set is generated to be essentially 30° phase shifted relative to a second current of a B phase of the second three-phase winding set, wherein a first current of a C phase of the first three-phase winding set is generated to be essentially 30° phase shifted relative to a second current of a C phase of the second three-phase winding set.

Thus, each phase of the first three-phase winding set is phase shifted by 30° relative to the respective phase of the second three-phase winding set. Thereby, an effective cancellation of a 6f harmonic distortion may be achieved.

According to an embodiment of the present invention, the first and second converters are controlled, across one period, for six separated time intervals in overmodulation, intercalated with six separated time intervals in linear (constant length of control vector) range (mode). It is to be noted that depending on how the overmodulation is formed, different separated time intervals are possible, for example, 12.

When the converters are controlled in the overmodulation, the control vectors are outside a maximum inner circle situated within a hexagon which is defined by the six active switching vectors of the space vector modulation. When the converters are controlled in the linear range, the length of the control vectors does not change and is constant in these time intervals.

Conventionally, overmodulation control may not be performed, since for a single three-phase winding set electrical machine it leads to a relatively large amplitude of a 6f harmonic distortion of the output or input AC voltage, and thus machine 6f current and torque ripples. However, having a dual winding set electrical machine, where the two sets are electrically phase shifted by 30 degrees, cancellation of the 6f harmonic distortion of the output torque is effectively reached.

According to an embodiment of the present invention, the first converter is controlled by PWM modulation such as space vector pulse width modulation based on a first control vector defining intended AC voltages, in particular in a dq-coordinate system, at first terminals of the first three-phase winding set, the first control vector having a first magnitude varying across a fundamental period of the AC voltage at the first terminals, in particular with a frequency six times a fundamental frequency being the inverse of the fundamental period.

The space vector pulse width modulation scheme is a conventionally known scheme to synthesize an intended voltage using a combination of switching vectors, in particular active switching vectors and zero switching vectors.

According to an embodiment of the present invention, the first magnitude is defined with reference to a circle and to a hexagon having a common central point, wherein the first magnitude corresponds to a length of a straight line from the central point to an edge of the hexagon, if the radius of the circle is equal to or larger than the length, wherein the first magnitude corresponds to the radius of the circle, if the radius of the circle is smaller than the length of a straight line from the central point to a corner or an edge of the hexagon, wherein in particular sections of the circle lie outside the hexagon.

Thereby, the first control vector is defined. Based on the defined first control vector, a conventional method may be applied to derive pulse width modulation signals which are then supplied to gates of the controllable switches within the converters.

According to an embodiment of the present invention, the radius of the circle in overmodulation control is greater than 1 in particular between 1 and 1.15 of a radius of a maximal inner circle fitting within the hexagon.

When the circle is between 1 and 1.1 of a radius of a maximal inner circle fitting within the hexagon, the AC voltage may be higher than it is conventionally achievable, without introducing other harmonic distortions of the machine torque, in particular keeping a 12f harmonic distortion in acceptable limit. If the radius of the circle is selected to be larger than 1.1 other harmonic distortions such as 12f may have too large amplitude which is undesired.

According to an embodiment of the present invention, the hexagon has a size such that the corners are away from the central point by a distance corresponding to the maximal voltage achievable at at least one of the first terminals.

The hexagon may represent the end points of the six active switching vectors. Setting the switching such that one of the possible switching vectors is applied may set a maximum voltage between two of the three terminals of the three-phase winding set. This voltage cannot be superseded, only voltages between zero and this maximum voltage can be generated between the respective terminals. Thus, the control vectors cannot have a length going beyond or falling outside the hexagon.

According to an embodiment of the present invention, the maximal voltage is achieved, when controllable switches in the first converter are switched according to an active vector in the space vector modulation scheme.

According to an embodiment of the present invention, the method further comprises measuring the first and/or second currents; filtering the first and/or second currents to reduce an amplitude of a 6f harmonic; supplying the filtered first and second currents to respective first and second current controllers; the current controllers outputting preliminary first and second control vectors, in particular having a magnitude smaller than the radius of the circle.

Usually, a current control may be applied comprising feedback of measured currents. Thereby, reference current(s) may be set and may be compared with the measured current(s), in particular in a dq-coordinate system rotating with the fundamental frequency. The current controllers may derive based on the difference between a reference current and the measured current components of a voltage which may define the control vector. Since in the dual channel three-phase machine with 30-degree phase shift between the two sets, the 6f harmonic torque from one set may cancel out that from the other set, the respective 6f harmonic comprised in the measured currents does not need to be reduced or even eliminated by the current control.
According to an embodiment of the present invention, the method further comprises supplying the preliminary first and second control vectors to respective first and second pre-modulation modules; the first and second pre-modulation modules deriving the first and second control vectors.

The preliminary first and second control vectors may correspond to circles (as represented in the vector space modulation diagram) fitting within the hexagon and corresponding to a particular magnitude of the AC voltage which is intended. In particular, the preliminary first and second control vectors may have a length (in particular not changing for a full period) corresponding to or being smaller than the radius of the maximum inner circle fitting within the hexagon. From the preliminary first and second control vectors, the first and second control vectors are derived using the first and second pre-modulation module. The first and second control vectors may satisfy the condition to be entirely within the hexagon.

According to an embodiment of the present invention, the first and second pre-modulation modules are adapted to increase the amplitude of the preliminary first and second control vectors, in particular from the radius of the maximal inner circle, to the radius of the circle (having larger radius than the maximal inner circle) and to derive the first and second control vectors such that their length is within the hexagon.

According to an embodiment of the present invention, the second converter is controlled by PWM modulation such as space vector pulse width modulation based on a second control vector defining intended AC voltages at second terminals of the second three-phase winding set, the second control vector essentially being equal to the first control vector phase shifted by 30°, wherein in particular the electrical machine is a generator, in particular of a wind turbine, wherein the first AC-DC converter and second AC-DC converter are generator connected converters, wherein further in particular a ratio between a number of slots and a number of poles of the electrical machine can be an integer or a fractional number.

In particular, the second converter may be essentially constructed similar or identical to the first converter and may be controlled, except for the relative phase shift of 30°, essentially in a same manner as the first converter.

The non-linear characteristic in the gain from the overmodulation may be compensated by increasing the amplitude in the reference signal. Thus, the reference vector near the corner of the hexagon may be shaped to have a higher level.

It should be understood that features individually or in any combination disclosed, described or explained for a method for controlling a dual three-phase fractional slot winding electrical machine may also be applied, individually or in any combination to an arrangement for controlling a dual three-phase fractional slot winding electrical machine according to embodiments of the present invention and vice versa.

According to an embodiment of the present invention it is provided an arrangement for controlling a dual three-phase electrical machine with 30-degree phase shift between the two sets, for example a fractional slot concentrated winding electrical machine having a first three-phase winding set being connected to a first AC-DC converter and having a second three-phase winding set being connected to a second AC-DC converter, the arrangement being adapted: to control the first and the second AC-DC converter such that first electric currents carried in the first three-phase winding set are essentially 30° phase shifted relative to respective second electric currents carried in the second three-phase winding set, wherein the arrangement is in particular adapted to perform a method according to one of the preceding embodiments.

The arrangement may be implemented partly in hardware and/or software. The arrangement may be part of a wind turbine controller. Furthermore, a generator system comprising a dual three-phase electrical machine, for example a fractional slot concentrated winding electrical machine and the arrangement for controlling the machine is provided.

Furthermore, a wind turbine comprising the generator system or the dual three-phase electrical machine, for example a fractional slot concentrated winding electrical machine and an arrangement for controlling the machine is provided.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 illustrates a hexagon and an inner circle as considered in an embodiment of the present invention;
Figs. 2 and 3 illustrate harmonics observed in conventional control methods of an electrical machine;
Fig. 4 schematically illustrates a portion of a dual three-phase electrical machine according to an embodiment of the present invention which is controlled according to a method according to an embodiment of the present invention;
Fig. 5 illustrates a control vector as applied in embodiments of the present invention;
Figs. 6, 7 and 8 illustrate details of the control and the harmonic content of the voltage when controlled according to the control vector illustrated in Fig. 5.
Fig. 9 illustrates a control vector according to an embodiment of the present invention;
Figs. 10, 11 and 12 illustrate details of the control and the harmonic content of the output voltage when controlled using the control vector illustrated in Fig. 9;
Fig. 13 illustrates a voltage control characteristics in overmodulation, as considered in embodiments of the present invention;
Fig. 14 illustrates an arrangement for controlling a dual three-phase electrical machine, for example a fractional slot concentrated winding electrical machine according to an embodiment of the present invention which is adapted to carry out a method according to an embodiment of the present invention;
Fig. 15 illustrates the compensation of non-linearity in overmodulation, as applied in embodiments of the present invention; and
Fig. 16 schematically illustrates a wind turbine according to an embodiment of the present invention comprising a generator system according to an embodiment of the present invention.

### Detailed Description

The illustration in the drawings is in schematic form. It is noted that in different figures, similar or identical elements are provided with the same reference signs or with reference signs, which are different from the corresponding reference signs only within the first digit.

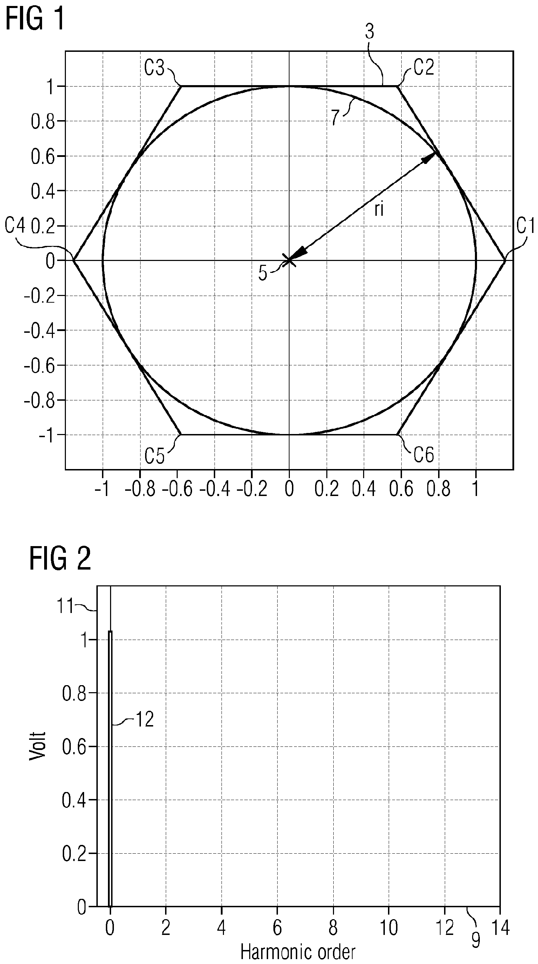

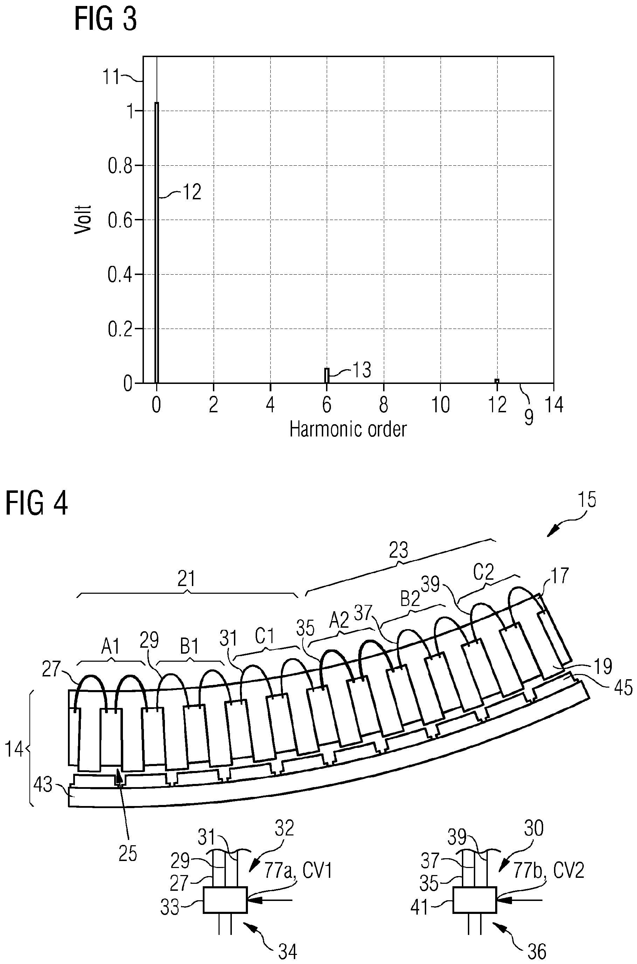

Fig. 1 illustrates a space vector modulation diagram for definition of a hexagon and a maximal inner circle as considered in embodiments of the present invention. Fig. 1 thereby illustrates a hexagon 3 having corners C1, C2, ..., C6 representing end points of switching vectors of the space vector modulation scheme. Thereby, the base points of the switching vectors are in the central point 5. Each of the switching vectors corresponds to a particular setting of the switching of controllable switches within a converter (such as converter 33 or 41 of Fig. 4) which is connected to the first set of three-phase windings.

If the control vector (for controlling the electrical machine) originating from the central point 5 lies on the hexagon 3, the machine is set to be controlled in the overmodulation. Within the hexagon 3, a maximal inner circle 7 (touching edged of the hexagon 3) is depicted representing a control vector having constant magnitude and being synthesizable by a combination of switching vectors. The radius ri of the maximal inner circle 7 is indicated in Fig. 1. When the converter is controlled by a control vector entirely lying within the maximum inner circle 7, the converter is set to be controlled in the linear range.

When the reference control voltage vector takes the shape of the maximum inner circle 7 in Fig. 1, in each 60° sector there will be an intersection (touch, tangency) between the reference vector and the hexagon 3. This is the point that no zero vectors can be used and the output voltage in the linear range reaches the maximum and the modulation depth may be defined as 1. If the amplitude in the reference voltage vector increases further, the section without possible use of zero vectors will extend, that is, in this section the control vector will have to move along the hexagon and the PWM process will be in the overmodulation region. Empirically, when the amplitude in the reference voltage is so high that no zero vectors are allowed through the whole rotating angle, the reference vector will be on the hexagon completely.

Figs. 2 and 3 depict the harmonic content of the voltages of the converter when controlled in the linear range (thus the control vector lies within the maximum inner circle 7 in Fig. 2) and when the converter is controlled in overmodulation (such that some section of the control vector lies on the hexagon 3, see Fig. 3). Thereby, the abscissas 9 indicate the harmonic order, while the ordinates 11 denote the amplitude of the corresponding harmonic order. When the converter is controlled in the linear range (Fig. 1, maximum inner circle 7), the voltage comprises only the order zero (reference sign 12) (thus being purely DC), while when controlled according to overmodulation, also a 6f harmonic order (reference sign 13) is observed. This harmonic order evolves in a single three-set winding electrical machine. From Figs. 2 and 3 it can be taken that an attempt to increase the fundamental output with overmodulation may result in low order harmonic distortion which would introduce harmonic current and then cause torque ripple in a generator. This may be particularly the case with a single three-phase machine or an integer slot distributed winding dual three-phase machine with zero phase shift. The resulting increase in vibration and noise levels may raise more concern than the gain in the voltage.

Embodiments of the present invention overcome these disadvantages. Namely, according to an embodiment of the present invention, a dual three-phase machine such as a fractional slot concentrated winding electrical machine is used, wherein the two winding sets are designed to have a 30-deg phase shift, and they are controlled such that currents are 30° phase shifted relative to each other. In this case, the 6f harmonic order of the machine torque cancels out.

Fig. 4 schematically illustrates a portion of a representative generator system 15 according to an embodiment of the present invention. The generator system comprises a stator yoke 17 having teeth 19 protruding radially outwards from the stator yoke 17. A first three-phase winding set 21 comprises three wires 27, 29, 31 one for a phase A1, one for a phase B1 and one for a phase C1. A second three-phase winding set 23 comprises three electrical wires 35, 37, 39 one for a phase A2, one for a phase B2 and one for a phase C2. The wires of the first winding set 21 are arranged in slots 25 and wound around teeth 19 which are adjacent to each other. Each of the wires corresponding to the phases A1, B1, C1 may be arranged in one or more slots 25 between adjacent teeth 19.

With further reference to Fig. 4, the wire for the phase A1 may be wound around teeth 19 such as to form two coils with one tooth in between. The other phases of the first set 21 and/or the second set 23 of windings may be wound in a similar manner, in particular immediately adjacent to each other.

The first set 21 of windings comprises a first wire 27, a second wire 29 and a third wire 31. These wires may on one end be connected to each other in a star configuration and the other ends may be connected to input terminals of a first (AC-DC) converter 33. The second set 23 comprises a first wire 35 for the phase A2, a second wire 37 for the phase B2 and a third wire 39 for the phase C2. Similarly as the first set 21 of windings, the wires 35, 37 and 39 of the second set 23 may on one end be connected to each other in a star configuration, while the other ends may be connected to input terminals of a second converter 41.

The generator system 15 may for example be configured as a generator of a wind turbine. The generator system further comprises an outer rotor 43 being rotatably supported relative to the stator yoke 17. The rotor 43 has attached thereto plural permanent magnets 45, which upon rotation of the rotor 43 may induce voltages in the first set 21 and the second set 23 of three-phase winding sets. The voltage of the output of the winding sets 21, 23 may be controlled by appropriately controlling the first converter 33 and the second converter 41 as will be described in more detail below. Stator, rotor and windings form the electrical machine 14.

For a dual three-phase fractional slot concentrated winding machine design there may be a level of freedom for the choice of electrical phase shift between the two three-phase channels, i.e. the first set 21 and the second set 23 of windings. In a symmetrical design, the phase shift may be 0 or 60°. However, an asymmetrical design with other phase shift may create some useful features. In particular, if the phase shift is set at 30°, the torque ripple at 6f frequency in one channel would have a cancellation effect on the 6f torque ripple in the other channel, as applied in embodiments of the present invention. That is, this machine would be more tolerant to the presence of 6f harmonics in the machine phase voltage and current. This machine according to an embodiment of the present invention may then be benefitted from overmodulation control, whilst the 6f harmonic would have little negative impact on its operation.

According to an embodiment of the present invention, the converters 33, 41 in Fig. 4 are controlled such that currents carried in the wire 27 for phase A1 of the first set of windings 21 and carried in the wire 35 for phase A2 in the second set 23 of windings are out of phase by 30°. The same applies for the wires 29 and 37 for the phases B1 and B2 and for the wires 31, 39 for the phases C1, C2. The converters 33, 41 have output terminals 34, 36, respectively for respective output of a DC voltage.

First terminals 32 of the first three-phase winding set 21 are connected to the first converter 33, second terminals 30 of the second three-phase winding set 23 are connected to the first converter 41.

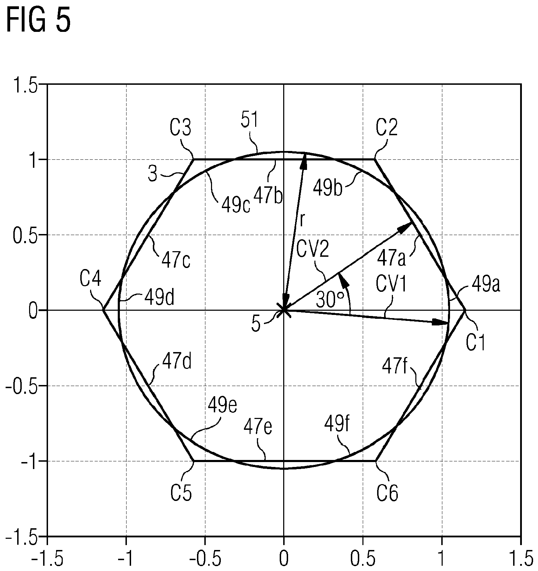

Fig. 5 illustrates a space vector modulation diagram including a control vector as applied in embodiments according to the present invention. The control vector, based on which the first converter 33 and the second converter 41 are controlled (30° phase shifted relative to each other) is defined in Fig. 5 by sections (straight lines) 47a, 47b, ..., 47f in the overmodulation regime intercalated by sections 49a, 49b, ..., 49f in the linear range. Thereby, the first and second converters 33, 41 are controlled for six separated time intervals (corresponding to sections 47a, 47b, ..., 47f) in overmodulation, intercalated with six separated time intervals (corresponding to sections 49a, 49b, ..., 49f) in linear range. Thereby, the radius r of the circle 51 is larger than the radius ri of the maximal inner circle 3 illustrated in Fig. 1. Thereby, a higher voltage is achieved. It is to be noted that depending on how the overmodulation is formed, different separated time intervals are possible, for example, 12.

Examples of control vectors CV1 reaching from the central point 5 to the circle section 49a exemplifies a control in the linear range, while a control vector CV2 pointing from the central point 5 to the section 47a represents a control in the overmodulation. During operation the control vectors rotate around the central point 5 with the fundamental frequency of the machine.

The exemplary control vectors CV1, CV2 are phase shifted by 30° and may be used for control of the first and second converters 33, 41, respectively.

Thus, the control switches from control in the linear range to the overmodulation and back to the linear range in an intercalated manner. The length of the control vectors CV1, CV2 varies across the fundamental period which corresponds to a whole circumference in Fig. 5.

The radius r of the circle 51 may be greater than 1 times the radius ri of the maximum inner circle 7 illustrated in Fig. 1. Fig. 5 corresponds to an overmodulation of 5%, as an example.

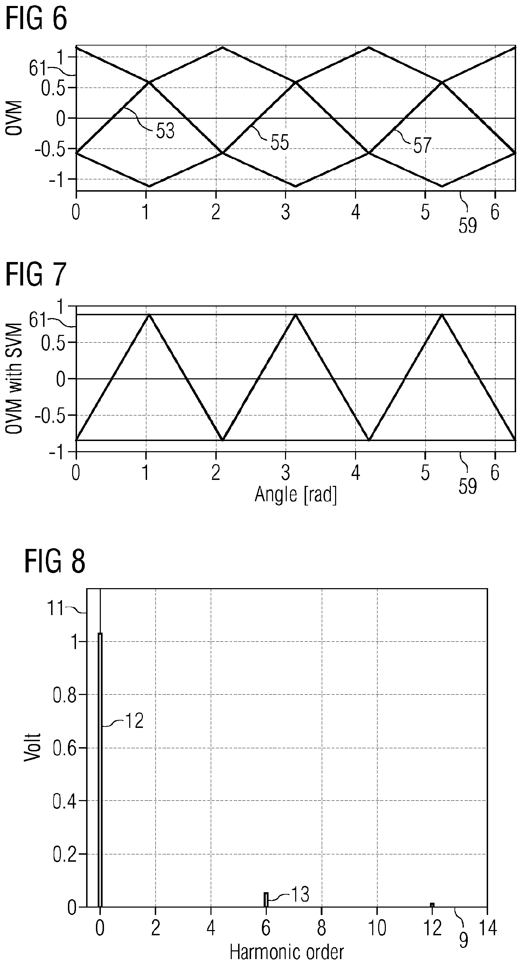

Fig. 6 illustrates the commanded voltages 53, 55, 57 as supplied to the wires 27, 29, 31 for example of the first set 21 of windings. Thereby, the abscissa 59 indicates the circumferential position or the angle in radians and the ordinate 61 indicates the amplitude of the voltage.

Fig. 7 illustrates the overmodulation with space vector modulation for the different phases. These signals are formed by taking the commanded voltages (in Fig.6) through a PWM modulation process, such as space vector PWM modulation, and are then used for control of the power switches in the converter.

Fig. 8 illustrates the harmonic content of the AC voltage when the considered winding set is controlled according to the control vector illustrated in Fig. 5. The voltage comprises the fundamental component 12 of zero order (thus being purely DC) and a 6f harmonic distortion (reference sign 13). However, when two independent winding sets are employed as is illustrated in Fig. 4, and when they are controlled to be 30° out of phase, the 6^{th} harmonic order component of the machine torque may cancel out.

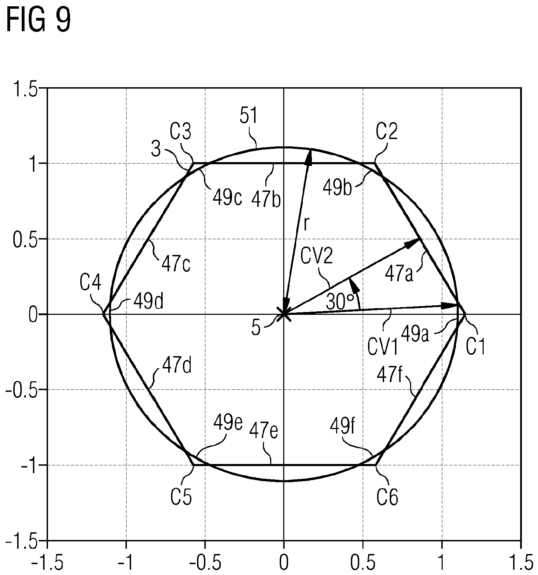

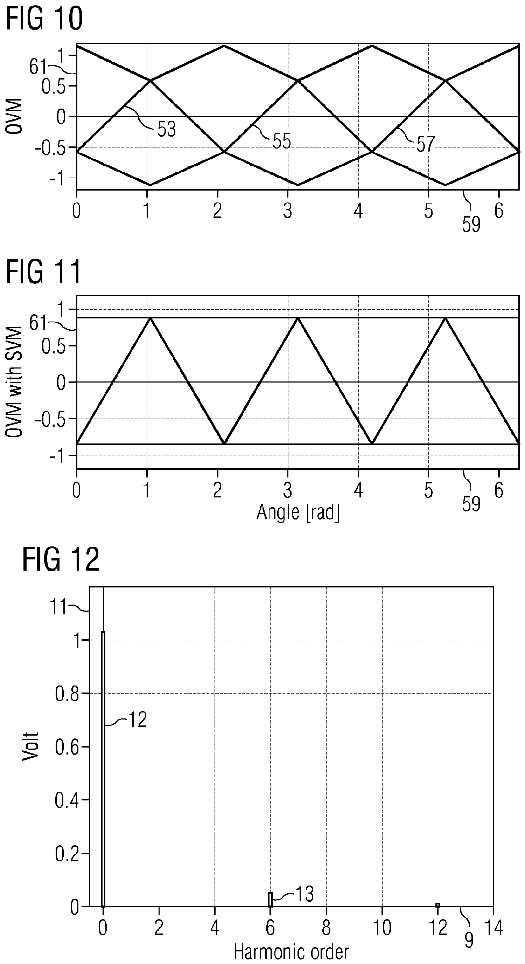

Figs. 9, 10, 11, 12 illustrate a vector control similar to the control illustrated in Figs. 5, 6, 7 and 8, respectively, wherein the overmodulation is higher in particular 10%. In other embodiments, overmodulation of other percentages may be applied.

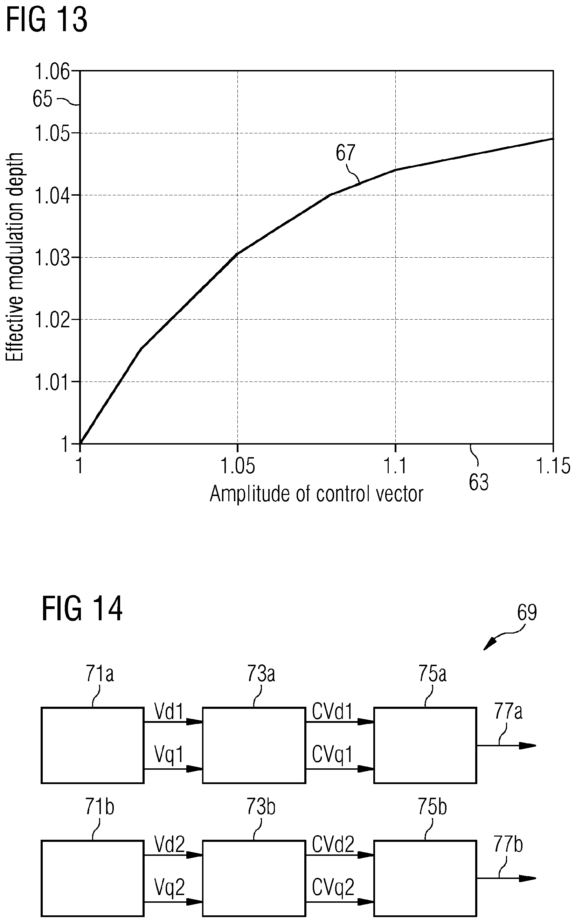

Fig. 13 illustrates a graph, wherein the abscissa 63 denotes the amplitude of the control vector and the ordinate 65 indicates the effective modulation depth. Thereby, the modulation depth may be defined as the ratio between the amplitude of the AC voltage input to the converters 33, 41 and the voltage at the output (34, 36 in Fig. 4) of the converters, i.e. the DC voltage. The effective modulation depth 67 increases with increasing amplitude of the control vector. With the modulation depth increase of 5%, the fundamental output will be around 3% higher; with the modulation depth increase of 10%, the fundamental output will be around 4.4% higher. When the control vector is on the hexagon, the fundamental output will be approximately 5% higher.

The table 1 below is a list of dominant harmonic components together with the DC value in the overmodulation range, where the space vector PWM modulation is applied. Herein M denotes the radius r of the circle 51 (in Fig. 5 or 9) in units of the radius ri of the maximal inner circle 7.

**Table 1:**

| | DC | 6f (%) | 12f (%) |
|---|---|---|---|
| M=1 | 1 | 0 | 0 |
| M=1.02 | 1.015 | 0.9 | 0.5 |
| M=1.05 | 1.030 | 2.72 | 0.6 |
| M=1.08 | 1.040 | 4.23 | 0.2 |
| M=1.1 | 1.044 | 5 | 0.8 |
| M=1.15 (Hexagon) | 1.049 | 5.82 | 1.6 |

It is shown that up to 10% of increase in the amplitude of reference vector (M=1.1), the 12f level (of harmonic distortion) remains fairly low, whilst the percentage of increase in 6f is pretty high. This however is not a concern, since in the dual three-phase electrical machine the 6f harmonic distortion in torque will be cancelled out. Although the harmonic currents would cause harmonic losses in the generator and converters, the gain in the reduction of fundamental losses in the system would be much higher.

If the overmodulation range is increased further, e.g. to 1.15 (i.e. to use the whole hexagon), the change in the 12f level may not be acceptable any more. Therefore, it may be suggested, according to an embodiment of the present invention, that the overmodulation may be limited to a certain level subject to applications.
Fig. 14 schematically illustrates an arrangement 69 for controlling a dual three-phase electrical machine with 30-deg phase shift between the two sets, for example a fractional slot concentrated winding electrical machine, such as the generator system 15 illustrated in Fig. 4, according to an embodiment of the present invention, which may be adapted for carrying out a method for controlling a dual three-phase electrical machine according to an embodiment of the present invention.

Thereby, the arrangement 69 comprises a first current controller 71a and a second current controller 71b which may receive not illustrated reference current values and also measured current values as a feedback input. The current controllers 71a, 71b generate preliminary control vectors, i.e. a first preliminary control vector Vd1, Vq1 and a second preliminary control vector Vd2, Vq2, in particular in the dq-coordinate system rotating synchronously with the fundamental frequency of the machine..

The preliminary control vectors are supplied to a first and a second pre-modulation module 73a, 73b, respectively. The pre-modulation modules 73a, 73b may increase the magnitude of the preliminary control vectors Vd1, Vq1, Vd2, Vq2 and may derive first and second control vectors CVd1, CVq1, CVd2, CVq2 which are then supplied to a first and a second space vector pulse width modulation modules 75a, 75b, respectively.

The PWM modules such as space vector pulse width modulation 75a, 75b then generate gate driver signals 77a and 77b for the first converter 33 and the second converter 41 (see Fig. 4), respectively.

The arrangement 69 is separated into two parts, for control of the two channels of the generator respectively. Apart from the functions of current control and space vector pulse width modulation, the method for overmodulation control is included in the block of the pre-modulation modules 73a, 73b.

To prevent from the interaction between current control and overmodulation, a notch filter for 6f may be applied in the current controller 71a and 71b, in particular filtering out 6f harmonics of measured currents.

In the pre-modulation module 73a, 73b, two functions may be implemented. Firstly, the non-linear characteristic from the overmodulation may be compensated by increasing the amplitude in the reference signal, thus increasing the amplitude of the preliminary first and second control vectors Vd1, Vq1, Vd2, Vq2. Thus, the reference vector near the corner of the hexagon may be shaped to have a higher level.

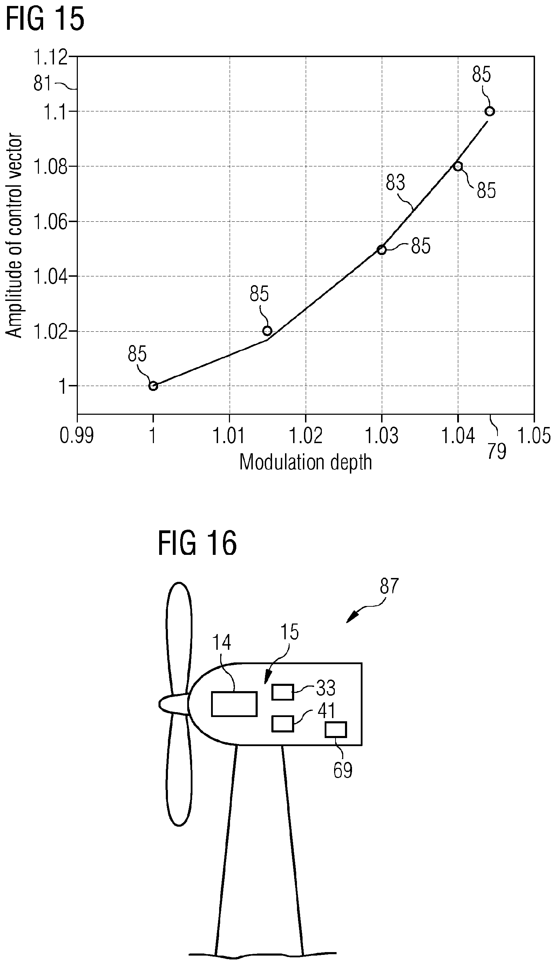

The compensation for non-linearity may be implemented by use of a look-up-table, or an expression by a second order equation, as is shown in Fig. 15 for example. Thereby, the abscissa 79 indicates the modulation depth, while the ordinate 81 indicates the amplitude of the control vector. The curve 83 represents the compensation, while the dots 85 represent the non-linearity. The two curves (83 and 85) have a good match as intended. It should be noted that, as the voltage command is part of feedback control, the slight misadjust in compensation of non-linearity won't affect the control performance.

The second function of the pre-modulation modules 73a, 73b is to go through the simple overmodulation process stated earlier so that the control voltage vector will stay within the boundary of the hexagon 3. It should be noted that the level of 6f current would be resulted in the phases of the generator due to overmodulation. These 6f current won't cause an issue in 6f torque ripples, but may create more losses in the generator and converter. However, it has been investigated that the loss increase due to overmodulation is less than 0.1% of the total loss and is almost negligible.

Fig. 16 schematically illustrates a wind turbine 87 comprising a generator system 15 (for example configured as is illustrated in Fig. 4) including electrical machine 14, converters 33, 41 and an arrangement 69 (for example configured as illustrated in Fig. 14) for controlling the converters 33 and 41 which in turn control the generator system 15. The wind turbine may further comprise a DC-AC converter or two DC-AC converters for connection to the grid. It should also be noted that reference signs in the claims should not be construed as limiting the scope of the claims.

## Claims

1. Method for controlling a dual three-phase machine (14), in particular a fractional slot concentrated winding electrical machine (14), having a first three-phase winding set (21) being connected to a first AC-DC converter (33) and having a second three-phase winding set (23) being connected to a second AC-DC converter (41), the method comprising:
controlling the first (33) and the second AC-DC converter (41) such that first electric currents carried in the first three-phase winding set (21) are essentially 30° phase shifted relative to respective second electric currents carried in the second three-phase winding set (23),
wherein the first converter (33) and second converter (41) are controlled by PWM across one fundamental period, for six separated time intervals (47a, ..., 47f) in overmodulation, intercalated with six separated time intervals (49a, ..., 49f) in linear range.

2. Method according to the preceding claim,
wherein a first current of an A phase of the first three-phase winding set is generated to be essentially 30° phase shifted relative to a second current of an A phase of the second three-phase winding set,
wherein a first current of a B phase of the first three-phase winding set is generated to be essentially 30° phase shifted relative to a second current of a B phase of the second three-phase winding set,
wherein a first current of a C phase of the first three-phase winding set is generated to be essentially 30° phase shifted relative to a second current of a C phase of the second three-phase winding set.

3. Method according to one of the preceding claims,
wherein the first converter (33) and second converter (41) are controlled by space vector modulation or third harmonic injection modulation, wherein another number of separated time intervals, e.g. 12, is present depending on the way of overmodulation.

4. Method according to one of the preceding claims,
wherein the first converter (33) is controlled by PWM such as space vector pulse width modulation based on a first control vector (CV1, CV2) defining intended AC voltages, in particular in a dq-coordinate system, at first terminals (32) of the first three-phase winding set (21), the first control vector having a first magnitude varying across a fundamental period of the AC voltage at the first terminals, in particular with a frequency six times a fundamental frequency being the inverse of the fundamental period.

5. Method according to one of the preceding claims,
wherein the first magnitude is defined with reference to a circle (51) and to a hexagon (3) having a common central point (5),
wherein the first magnitude corresponds to a length of a straight line from the central point (5) to an edge of the hexagon (3), if the radius (r, M) of the circle (51) is equal to or larger than the length,
wherein the first magnitude corresponds to the radius (r, M) of the circle (51), if the radius (r) of the circle (51) is smaller than the length of a straight line from the central point (5) to a corner (C1, ..., C6) or an edge of the hexagon (3),
wherein in particular sections of the circle (51) lie outside the hexagon (3).

6. Method according to one of the preceding claims,
wherein the radius (r, M) of the circle (51) is greater than 1, in particular between 1 and 1.1, of a radius (ri) of a maximal inner circle (7) fitting within the hexagon (3).

7. Method according to one of the preceding claims,
the hexagon (3) having a size such that the corners (C1, ..., C6) are away from the central point (5) by a distance corresponding to the maximal voltage achievable at atleast one of the first terminals.

8. Method according to one of the preceding claims,
wherein the maximal voltage is achieved, when controllable switches in the first or second converter (33, 41) are switched according to an active vector in the space vector modulation scheme.

9. Method according to one of the preceding claims,
the method further comprising:
measuring the first and/or second currents;
filtering the first and/or second currents to reduce an amplitude of a 6f harmonic;
supplying the filtered first and second currents to respective first and second current controllers (71a, 71b);
the current controllers outputting preliminary first and second control vectors (Vd1, Vq1, Vd2, Vq2), in particular having a magnitude smaller than the radius (r) of the circle.

10. Method according to one of the preceding claims, the method further comprising:
supplying the preliminary first and second control vectors (Vd1, Vq1, Vd2, Vq2) to respective first and second pre-modulation modules (75a, 75b);
the first and second pre-modulation modules deriving the first and second control vectors (CVd1, CVq1, CVd2, CVq2).

11. Method according to one of the preceding claims, wherein the first and second pre-modulation modules (75a, 75b) are adapted to:
increase the amplitude of the preliminary first and second control vectors (Vd1, Vq1, Vd2, Vq2), in particular from the radius (ri) of the maximal inner circle (7), to the radius (r, M) of the circle (51);
derive the first and second control vectors (CVd1, CVq1, CVd2, CVq2) such that their length is within the hexagon (3).

12. Method according to one of the preceding claims, the wherein the second converter (41) is controlled by space vector pulse width modulation and/or third harmonic injection modulation based on a second control vector (CV2) defining intended AC voltages at second terminals of the second three-phase winding set, the second control vector (CV2) essentially being equal to the first control vector (CV1) phase shifted by 30°,
wherein in particular the electrical machine (14) is a generator, in particular of a wind turbine (87), wherein the first AC-DC converter and second AC-DC converter are generator connected converters,
wherein further in particular a ratio between a number of slots and a number of poles of the electrical machine is not an integer.

13. Arrangement (69) configured to control a dual three-phase machine, in particular a fractional slot concentrated winding electrical machine (14), having a first three-phase winding set (21) being connected to a first AC-DC converter (33) and having a second three-phase winding set (23) being connected to a second AC-DC converter (41), the arrangement being adapted:
to control the first AC-DC converter (33) and the second AC-DC converter (41) such that first electric currents carried in the first three-phase winding set are essentially 30° phase shifted relative to respective second electric currents carried in the second three-phase winding set, wherein the arrangement is in particular adapted to perform a method according to one of the preceding claims,
wherein the first converter (33) and second converter (41) are controlled by PWM across one fundamental period, for six separated time intervals (47a, ..., 47f) in overmodulation, intercalated with six separated time intervals (49a, ..., 49f) in linear range.

14. Wind turbine (87) having a generator system (15) comprising:
a dual three-phase machine, in particular a fractional slot concentrated winding electrical machine (14), configured as a generator;
a first converter (33);
a second converter (41); and
an arrangement according to the preceding claim, connected for controlling the electrical machine.

## Patentansprüche

1. Verfahren zur Steuerung einer dualen dreiphasigen Maschine (14), insbesondere einer elektrischen Maschine mit einer konzentrierten Bruchlockwicklung (14), die eine erste dreiphasige Wicklungskombination (21), die mit einem ersten AC-DC-Wandler (33) verbunden ist, aufweist und eine zweite dreiphasige Wicklungskombination (23), die mit einem zweiten AC-DC-Wandler (41) verbunden ist, aufweist, wobei das Verfahren Folgendes umfasst:
Steuern des ersten (33) und des zweiten AC-DC-Wandlers (41) derart, dass in der ersten dreiphasigen Wicklungskombination (21) übertragene erste elektrische Ströme gegenüber in der zweiten dreiphasigen Wicklungskombination (23) übertragenen zweiten elektrischen Strömen im Wesentlichen um 30° phasenverschoben sind,
wobei der erste Wandler (33) und der zweite Wandler (41) über eine Grundperiode, für sechs getrennte Zeitintervalle (47a, ..., 47f) in Übermodulation, interkaliert mit sechs getrennten Zeitintervallen (49a, ..., 49f) im linearen Bereich durch PWM gesteuert werden.

2. Verfahren nach dem vorhergehenden Anspruch,
wobei ein erster Strom einer A-Phase der ersten dreiphasigen Wicklungskombination erzeugt wird, um im Wesentlichen gegenüber einem zweiten Strom einer A-Phase der zweiten dreiphasigen Wicklungskombination um 30° phasenverschoben zu sein,
wobei ein erster Strom einer B-Phase der ersten dreiphasigen Wicklungskombination erzeugt wird, um im Wesentlichen gegenüber einem zweiten Strom einer B-Phase der zweiten dreiphasigen Wicklungskombination um 30° phasenverschoben zu sein,
wobei ein erster Strom einer C-Phase der ersten dreiphasigen Wicklungskombination erzeugt wird, um im Wesentlichen gegenüber einem zweiten Strom einer C-Phase der zweiten dreiphasigen Wicklungskombination um 30° phasenverschoben zu sein.

3. Verfahren nach einem der vorhergehenden Ansprüche,
wobei der erste Wandler (33) und der zweite Wandler (41) durch Raumvektormodulation oder die dritte Harmonische der Einspritzmodulation gesteuert werden, wobei in Abhängigkeit von der Art der Übermodulation eine andere Anzahl von getrennten Zeitintervallen, z. B. 12, vorhanden ist.

4. Verfahren nach einem der vorhergehenden Ansprüche,
wobei der erste Wandler (33) gesteuert wird durch PWM, etwa Raumvektor-Pulsweitenmodulation, auf Grundlage eines ersten Steuervektors (CV1, CV2), der an ersten Anschlüssen (32) der ersten dreiphasigen Wicklungskombination (21) vorgesehene Wechselspannungen, insbesondere in einem dq-Koordinatensystem, definiert, wobei der erste Steuervektor eine erste Größe aufweist, die über eine Grundperiode der Wechselspannung an den ersten Anschlüssen, insbesondere mit einer Frequenz von sechsmal einer Grundfrequenz, die der Kehrwert der Grundperiode ist, variiert.

5. Verfahren nach einem der vorhergehenden Ansprüche,
wobei die erste Größe mit Bezug auf einen Kreis (51) und auf ein Sechseck (3), die einen gemeinsamen Mittelpunkt (5) haben, definiert ist,
wobei die erste Größe einer Länge einer geraden Linie von dem Mittelpunkt (5) zu einer Kante des Sechsecks (3) entspricht, wenn der Radius (r, M) des Kreises (51) gleich der oder größer als die Länge ist,
wobei die erste Größe dem Radius (r, M) des Kreises (51) entspricht, wenn der Radius (r) des Kreises (51) kleiner als die Länge einer geraden Linie von dem Mittelpunkt (5) zu einer Ecke (C1, ..., C6) oder einer Kante des Sechsecks (3) ist, wobei insbesondere Abschnitte des Kreises (51) außerhalb des Sechsecks (3) liegen.

6. Verfahren nach einem der vorhergehenden Ansprüche,
wobei der Radius (r, M) des Kreises (51) größer als 1, insbesondere zwischen 1 und 1,1, eines Radius (ri) eines maximalen Innenkreises (7), der in das Sechseck (3) passt, ist.

7. Verfahren nach einem der vorhergehenden Ansprüche,
wobei das Sechseck (3) eine solche Größe hat, dass die Ecken (C1, ..., C6) um einen Abstand von dem Mittelpunkt (5) entfernt sind, der der an mindestens einem der ersten Anschlüsse erreichbaren maximalen Spannung entspricht.

8. Verfahren nach einem der vorhergehenden Ansprüche,
wobei die maximale Spannung erreicht wird, wenn steuerbare Schalter in dem ersten oder zweiten Wandler (33, 41) entsprechend einem aktiven Vektor in dem Raumvektormodulationsschema geschaltet wird.

9. Verfahren nach einem der vorhergehenden Ansprüche,
wobei das Verfahren ferner Folgendes umfasst:
Messen der ersten und/oder zweiten Ströme,
Filtern der ersten und/oder zweiten Ströme, um eine Amplitude einer Harmonischen 6f zu reduzieren,
Zuführen der gefilterten ersten und zweiten Ströme zu jeweiligen ersten und zweiten Stromsteuerungen (71a, 71b),
wobei die ersten und zweiten Stromsteuerungen vorläufige erste und zweite Steuervektoren (Vd1, Vq1, Vd2, Vq2), insbesondere mit einer Größe, die kleiner als der Radius (r) des Kreises ist, ausgeben.

10. Verfahren nach einem der vorhergehenden Ansprüche,
wobei das Verfahren ferner Folgendes umfasst:
Liefern der vorläufigen ersten und zweiten Steuervektoren (Vd1, Vq1, Vd2, Vq2) zu jeweiligen ersten und zweiten Vormodulationsmodulen (75a, 75b),
wobei die ersten und zweiten Vormodulationsmodule die ersten und zweiten Steuervektoren (CVd1, CVq1, CVd2, CVq2) ableiten.

11. Verfahren nach einem der vorhergehenden Ansprüche,
wobei die ersten und zweiten Vormodulationsmodule (75a, 75b) dazu ausgebildet sind:
die Amplitude der vorläufigen ersten und zweiten Steuervektoren (Vd1, Vq1, Vd2, Vq2) zu erhöhen, insbesondere von dem Radius (ri) des maximalen Innenkreises (7) auf den Radius (r, M) des Kreises (51),
die ersten und zweiten Steuervektoren (CVd1, CVq1, CVd2, CVq2) so abzuleiten, dass ihre Länge innerhalb des Sechsecks (3) liegt.

12. Verfahren nach einem der vorhergehenden Ansprüche,
wobei der zweite Wandler (41) gesteuert wird durch Raumvektor-Pulsweitenmodulation und/oder die dritte Harmonische der Einspritzmodulation auf Grundlage eines zweiten Steuervektors (CV2), der an zweiten Anschlüssen der zweiten dreiphasigen Wicklungskombination vorgesehene Wechselspannungen definiert, wobei der zweite Steuervektor (CV2) im Wesentlichen gleich dem um 30° phasenverschobenen ersten Steuervektor (CV1) ist,
wobei insbesondere die elektrische Maschine (14) ein Generator, insbesondere einer Windkraftanlage (87) ist, wobei der erste AC-DC-Wandler und der zweite AC-DC-Wandler mit dem Generator verbundene Wandler sind,
wobei ferner insbesondere ein Verhältnis zwischen einer Anzahl von Schlitzen und einer Anzahl von Polen der elektrischen Maschine keine Ganzzahl ist.

13. Anordnung (69), die dazu ausgebildet ist, eine duale dreiphasige Maschine, insbesondere eine elektrische Maschine mit einer konzentrierten Bruchlockwicklung (14) zu steuern, die eine erste dreiphasige Wicklungskombination (21), die mit einem ersten AC-DC-Wandler (33) verbunden ist, aufweist und eine zweite dreiphasige Wicklungskombination (23), die mit einem zweiten AC-DC-Wandler (41) verbunden ist, aufweist, wobei die Anordnung dazu ausgebildet ist,
den ersten AC-DC-Wandler (33) und den zweiten AC-DC-Wandler (41) derart zu steuern, dass in der ersten dreiphasigen Wicklungskombination übertragene erste elektrische Ströme gegenüber in der zweiten dreiphasigen Wicklungskombination übertragenen zweiten elektrischen Strömen im Wesentlichen um 30° phasenverschoben sind,
wobei die Anordnung im Wesentlichen dazu ausgebildet ist, ein Verfahren nach einem der vorhergehenden Ansprüche auszuführen, wobei der erste Wandler (33) und der zweite Wandler (41) über eine Grundperiode, für sechs getrennte Zeitintervalle (47a, ..., 47f) in Übermodulation, interkaliert mit sechs getrennten Zeitintervallen (49a, ..., 49f) im linearen Bereich durch PWM gesteuert werden.

14. Windkraftanlage (87) mit einem Generatorsystem (15), das Folgendes umfasst:
eine duale dreiphasige Maschine, insbesondere eine elektrische Maschine mit einer konzentrierten Bruchlockwicklung (14), die als ein Generator ausgebildet ist,
einen ersten Wandler (33),
einen zweiten Wandler (41) und
eine Anordnung nach dem vorherigen Anspruch, die verbunden ist, um die elektrische Maschine zu steuern.

## Revendications

1. Procédé de commande d'une machine triphasée double (14), en particulier une machine électrique à enroulements concentrés à nombre fractionnaire d'encoches (14), ayant un premier ensemble d'enroulements triphasés (21) étant connectés à un premier convertisseur CA-CC (33) et ayant un deuxième ensemble d'enroulements triphasés (23) étant connectés à un deuxième convertisseur CA-CC (41), le procédé comprenant :
la commande du premier (33) et du deuxième convertisseur CA-CC (41) de telle manière que des premiers courants électriques transportés dans le premier ensemble d'enroulements triphasés (21) sont déphasés d'essentiellement 30° par rapport à des deuxièmes courants électriques respectifs transportés dans le deuxième ensemble d'enroulements triphasés (23),
dans lequel le premier convertisseur (33) et le deuxième convertisseur (41) sont commandés par PWM sur une période fondamentale, pour six intervalles de temps séparés (47a, ..., 47f) en surmodulation, intercalés avec six intervalles de temps séparés (49a, ..., 49f) en plage linéaire.

2. Procédé selon la revendication précédente,
dans lequel un premier courant d'une phase A du premier ensemble d'enroulements triphasés est généré pour être déphasé d'essentiellement 30° par rapport à un deuxième courant d'une phase A du deuxième ensemble d'enroulements triphasés,
dans lequel un premier courant d'une phase B du premier ensemble d'enroulements triphasés est généré pour être déphasé d'essentiellement 30° par rapport à un deuxième courant d'une phase B du deuxième ensemble d'enroulements triphasés,
dans lequel un premier courant d'une phase C du premier ensemble d'enroulements triphasés est généré pour être déphasé d'essentiellement 30° par rapport à un deuxième courant d'une phase C du deuxième ensemble d'enroulements triphasés.

3. Procédé selon l'une des revendications précédentes,
dans lequel le premier convertisseur (33) et le deuxième convertisseur (41) sont commandés par modulation de vecteur spatial ou par modulation par injection d'harmoniques de rang 3, dans lequel un autre nombre d'intervalles de temps séparés, par exemple 12, est présent en fonction du procédé de surmodulation.

4. Procédé selon l'une des revendications précédentes,
dans lequel le premier convertisseur (33) est commandé par PWM telle qu'une modulation d'impulsions en durée par vecteur spatial basée sur un premier vecteur de commande (CV1, CV2) définissant des tensions de CA désirées, en particulier dans un système de coordonnées dq, au niveau de premières bornes (32) du premier ensemble d'enroulements triphasés (21), le premier vecteur de commande ayant une première grandeur variant sur une période fondamentale de la tension de CA au niveau des premières bornes, en particulier avec une fréquence six fois une fréquence fondamentale étant l'inverse de la période fondamentale.

5. Procédé selon l'une des revendications précédentes,
dans lequel la première grandeur est définie en référence à un cercle (51) et à un hexagone (3) ayant un point central (5) commun,
dans lequel la première grandeur correspond à une longueur d'une ligne droite depuis le point central (5) jusqu'à un bord de l'hexagone (3), si le rayon (r, M) du cercle (51) est égal ou supérieur à la longueur,
dans lequel la première grandeur correspond au rayon (r, M) du cercle (51), si le rayon (r) du cercle (51) est plus petit que la longueur d'une ligne droite depuis le point central (5) jusqu'à un angle (C1, ..., C6) ou un bord de l'hexagone (3),
dans lequel en particulier des sections du cercle (51) sont à l'extérieur de l'hexagone (3).

6. Procédé selon l'une des revendications précédentes,
dans lequel le rayon (r, M) du cercle (51) est supérieur à 1, en particulier entre 1 et 1,1, d'un rayon (ri) d'un cercle intérieur maximal (7) s'ajustant à l'intérieur de l'hexagone (3).

7. Procédé selon l'une des revendications précédentes, l'hexagone (3) ayant une taille telle que les angles (C1, ..., C6) sont espacés du point central (5) d'une distance correspondant à la tension maximale réalisable au niveau d'au moins une des premières bornes.

8. Procédé selon l'une des revendications précédentes,
dans lequel la tension maximale est réalisée lorsque des commutateurs commandables dans le premier ou le deuxième convertisseur (33, 41) sont commutés conformément à un vecteur actif dans le programme de modulation de vecteur spatial.

9. Procédé selon l'une des revendications précédentes,
le procédé comprenant en outre :
la mesure des premiers et/ou deuxièmes courants ;
le filtrage des premiers et/ou deuxièmes courants pour réduire une amplitude d'une harmonique 6f ;
la fourniture des premiers et deuxièmes courants filtrés à des premier et deuxième contrôleurs de courant (71a, 71b) respectifs ;
les contrôleurs de courant délivrant en sortie des premiers et deuxièmes vecteurs de commande préliminaires (Vd1, Vq1, Vd2, Vq2), en particulier ayant une grandeur plus petite que le rayon (r) du cercle.

10. Procédé selon l'une des revendications précédentes,
le procédé comprenant en outre :
la fourniture des premiers et deuxièmes vecteurs de commande préliminaires (Vd1, Vq1, Vd2, Vq2) à des premier et deuxième modules de pré-modulation (75a, 75b) respectifs ;
les premier et deuxième modules de pré-modulation dérivant les premiers et deuxièmes vecteurs de commande (CVd1, CVq1, CVd2, CVq2) .

11. Procédé selon l'une des revendications précédentes, dans lequel les premier et deuxième modules de pré-modulation (75a, 75b) sont adaptés à :
augmenter l'amplitude des premiers et deuxièmes vecteurs de commande préliminaires (Vd1, Vq1, Vd2, Vq2), en particulier du rayon (ri) du cercle intérieur maximal (7) au rayon (r, M) du cercle (51) ;
dériver les premiers et deuxièmes vecteurs de commande (CVd1, CVq1, CVd2, CVq2) de telle manière que leur longueur est à l'intérieur de l'hexagone (3).

12. Procédé selon l'une des revendications précédentes,
dans lequel le deuxième convertisseur (41) est commandé par modulation d'impulsions en durée par vecteur spatial et/ou modulation par injection d'harmoniques de rang 3 sur la base d'un deuxième vecteur de commande (CV2) définissant des tensions de CA désirées au niveau de deuxièmes bornes du deuxième ensemble d'enroulements triphasés, le deuxième vecteur de commande (CV2) étant essentiellement égal au premier vecteur de commande (CV1) déphasé de 30°,
dans lequel en particulier la machine électrique (14) est un générateur, en particulier d'une éolienne (87), dans lequel le premier convertisseur CA-CC et le deuxième convertisseur CA-CC sont des convertisseurs connectés de générateur,
dans lequel en outre en particulier un rapport entre un nombre d'encoches et un nombre de pôles de la machine électrique n'est pas un entier.

13. Agencement (69) configuré pour commander une machine triphasée double, en particulier une machine électrique à enroulements concentrés à nombre fractionnaire d'encoches (14), ayant un premier ensemble d'enroulements triphasés (21) étant connectés à un premier convertisseur CA-CC (33) et ayant un deuxième ensemble d'enroulements triphasés (23) étant connectés à un deuxième convertisseur CA-CC (41), l'agencement étant adapté :
à commander le premier convertisseur CA-CC (33) et le deuxième convertisseur CA-CC (41) de telle manière que des premiers courants électriques transportés dans le premier ensemble d'enroulements triphasés sont déphasés d'essentiellement 30° par rapport à des deuxièmes courants électriques respectifs transportés dans le deuxième ensemble d'enroulements triphasés,
dans lequel l'agencement est en particulier adapté à mettre en œuvre un procédé selon l'une des revendications précédentes, dans lequel le premier convertisseur (33) et le deuxième convertisseur (41) sont commandés par PWM sur une période fondamentale, pour six intervalles de temps séparés (47a, ..., 47f) en surmodulation, intercalés avec six intervalles de temps séparés (49a, ..., 49f) en plage linéaire.

14. Éolienne (87) ayant un système (15) de générateur comprenant :
une machine triphasée double, en particulier une machine électrique à enroulements concentrés à nombre fractionnaire d'encoches (14), configurée comme un générateur ;
un premier convertisseur (33) ;
un deuxième convertisseur (41) ; et
un agencement selon la revendication précédente, connecté pour commander la machine électrique.
